# EUROPEAN PATENT SPECIFICATION

(11) **EP 3 872 302 B1**
(45) Date of publication and mention of the grant of the patent: **28.12.2022**
(21) Application number: 21155992.7
(22) Date of filing: 09.02.2021
(51) Int. Cl.: F01D 5/08, F01D 9/06, F01D 25/12, F01D 25/14, F02C 7/18, F01D 11/00

(54) **TURBINE WITH COOLED VANE AND BLADE STAGES**
TURBINE MIT GEKÜHLTEN LEIT- UND LAUFSCHAUFELREIHEN
TURBINE AVEC ÉTAGES D'AUBES STATORIQUES ET ROTORIQUES REFROIDIES

(30) Priority: 26.02.2020 JP 2020030825
(43) Date of publication of application: 01.09.2021
(73) Proprietor: Toshiba Energy Systems & Solutions Corporation, Saiwai-ku Kawasaki-shi Kanagawa 2120013 (JP)
(72) Inventor: Tashima, Tsuguhisa, Kanagawa, 212-0013 (JP); Ono, Takahiro, Kanagawa, 212-0013 (JP); Iwai, Shogo, Kanagawa, 212-0013 (JP); Nomura, Daisuke, Kanagawa, 212-0013 (JP); Takagi, Norikazu, Kanagawa, 212-0013 (JP); Okuyama, Tomomi, Kanagawa, 212-0013 (JP); Nishimura, Koki, Kanagawa, 212-0013 (JP)
(74) Representative: Hoffmann Eitle

(56) References cited:
- EP-A2- 2 343 443
- EP-A2- 2 687 681
- DE-T5-112015 003 934
- FR-A- 1 548 541
- JP-A- 2006 104 951
- JP-A- 2013 019 285
- US-A1- 2019 323 351

## Description

### FIELD

Embodiments of the present invention relate to a turbine.

### BACKGROUND

A turbine is for example known from US 2019/323351 A1 forming the basis for the preamble of claim 1. Other turbines are disclosed in JP 2013-019285A, DE 11 2015 003934 T5, EP 2 687 681 A2, JP 2006-104951 A, EP 2 343 443 A2 and FR 1 548 541 A. In a thermal power generation system of a supercritical CO₂ turbine cycle, supercritical CO₂ is used as a working medium to operate a CO₂ turbine. Here, for example, the use of CO₂ as a cooling medium to cool stator blades has been proposed.

In a case where a turbine shaft rotates at a high speed in a state in which the flow rate of the working medium flowing in the CO₂ turbine is low as when an activation operation, a partial load operation, or the like is executed, a reverse flow of the working medium is generated near an exhaust stage (final stage), and loss called windage loss causes a rise in the atmospheric temperature. As a result, the temperature of components near the exhaust stage may rise to exceed an allowable temperature. For example, the high-temperature working medium discharged from the exhaust stage is sucked into an exhaust-stage wheel space located downstream of a wheel of the exhaust stage in a turbine rotor, so that rotor strength may exceed an allowable value. Therefore, it is important to take a measure to prevent overheating caused by the windage loss.

Not including a device for reducing the pressure nearly to vacuum, such as a steam condenser of a steam turbine, the thermal power generation system of the supercritical CO₂ turbine cycle is activated in a state with a relatively high exhaust pressure. Nevertheless, a sufficient windage loss countermeasure has not conventionally been taken.

### SUMMARY OF THE INVENTION

Under such circumstances, an object of the present invention is to provide a turbine in which a sufficient windage loss countermeasure can be executed. A turbine according to the present invention is defined in claim 1. Embodiments of the invention may be found in the dependent claims.

### BRIEF DESCRIPTION OF THE DRAWINGS

FIG. 1 is a sectional view schematically illustrating a CO₂ turbine 12 according to a first embodiment.
FIG. 2 is an enlarged sectional view illustrating a partial section (xz plane) of the CO₂ turbine 12 according to the first embodiment.
FIG. 3 is an enlarged sectional view illustrating a partial section (xz plane) of a CO₂ turbine 12 according to Modification Example 1 of the first embodiment.
FIG. 4 is an enlarged sectional view illustrating a partial section (xz plane) of a CO₂ turbine 12 according to Modification Example 2 of the first embodiment.
FIG. 5 is an enlarged sectional view illustrating a partial section (xz plane) of a CO₂ turbine 12 according to Modification Example 3 of the first embodiment.
FIG. 6 is an enlarged sectional view illustrating a partial section (xz plane) of a CO₂ turbine 12 according to Modification Example 4 of the first embodiment.
FIG. 7 is an enlarged sectional view illustrating a partial section (xz plane) of a CO₂ turbine 12 according to a second embodiment.

### DETAILED DESCRIPTION

### <First Embodiment>

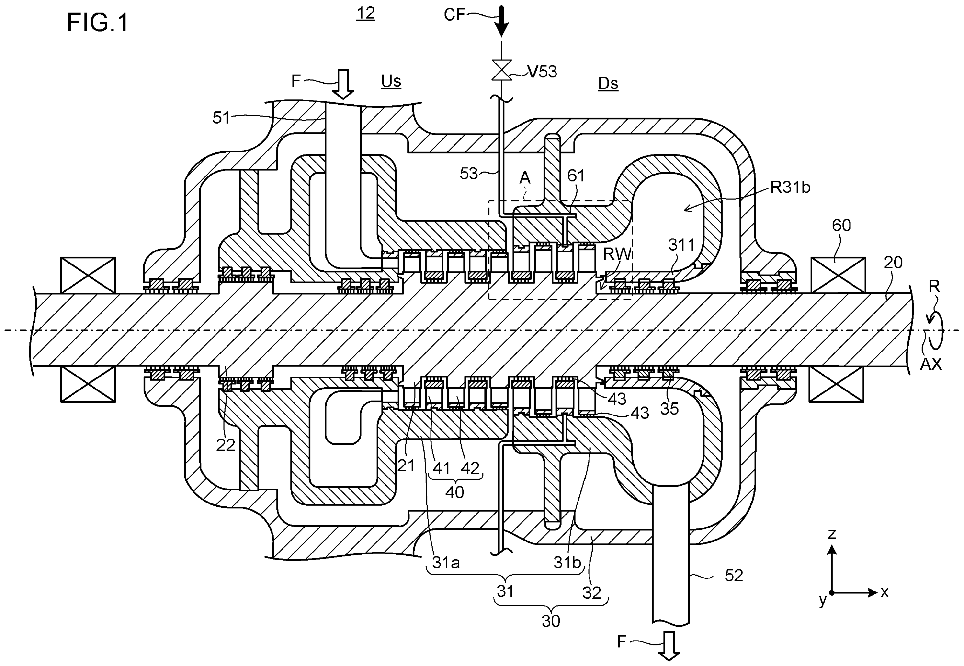

A CO₂ turbine 12 according to a first embodiment will be described using FIG. 1. FIG. 1 illustrates a cross-section in a vertical plane (xz plane) defined by a vertical direction z and a first horizontal direction x.

As illustrated in FIG. 1, the CO₂ turbine 12 includes a turbine rotor 20, a turbine casing 30, and turbine stages 40. The CO₂ turbine 12 is a multi-stage axial turbine, where a working medium F containing CO₂ is introduced into the turbine casing 30 through a working medium inlet pipe 51 to work in the plurality of turbine stages 40 arranged from an upstream side Us to a downstream side Ds in an axial direction (x) along a rotation axis AX of the turbine rotor 20. Thereafter, the working medium F is discharged to the outside through an exhaust pipe 52. Further, in the CO₂ turbine 12, a cooling medium CF containing CO₂ is introduced into the turbine casing 30 from the outside through a cooling medium inlet pipe 53. The working medium F is, for example, a supercritical medium containing a combustion gas generated by combustion in a combustor, and the cooling medium CF is, for example, a supercritical medium that has been subjected to cooling and so on after discharged from the CO₂ turbine 12, and when introduced, it is lower in temperature and higher in pressure than the working medium F.

Parts forming the CO₂ turbine 12 of this embodiment will be sequentially described in detail.

As illustrated in FIG. 1, the turbine rotor 20 is rotatably supported by a bearing 60 with its rotation axis AX along the first horizontal direction x. A plurality of rotor wheels 21 are provided on the outer peripheral surface of the turbine rotor 20. The plurality of rotor wheels 21 are arranged in the axial direction (x) along the rotation axis AX. On the outer peripheral surface of the turbine rotor 20, a balance piston 22 is further provided. The turbine rotor 20 is connected to a generator not illustrated in FIG. 1.

As illustrated in FIG. 1, the turbine casing 30 is structured as a double casing having an inner casing 31 and an outer casing 32.

As illustrated in FIG. 1, the inner casing 31 of the turbine casing 30 includes a first inner casing part 31a and a second inner casing part 31b, and the first inner casing part 31a and the second inner casing part 31b are arranged in the axial direction (x) along the rotation axis AX.

The first inner casing part 31a is installed around the turbine rotor 20 to surround the turbine stages 40 on the upstream Us side (front-stage side) out of the plurality of turbine stages 40 and the balance piston 22.

The second inner casing part 31b is installed around the turbine rotor 20 to surround the turbine stages 40 on the downstream Ds side (rear-stage side) out of the plurality of turbine stages 40. The second inner casing part 31b includes a seal head 311 installed at a position that is more on the downstream side Ds and is more on the radially inner side than the turbine stage 40 of the exhaust stage (final stage). An exhaust chamber R31b is formed in the second inner casing part 31b. The exhaust chamber R31b is a ring-shaped space surrounding the periphery of the turbine rotor 20 in a rotation direction R.

In the turbine casing 30, the outer casing 32 houses the turbine rotor 20 with the inner casing 31 therebetween.

Seal members 35 are also provided in the turbine casing 30 to seal a gap between the inner peripheral surface of the inner casing 31 and the outer peripheral surface of the turbine rotor 20 and a gap between the inner peripheral surface of the outer casing 32 and the outer peripheral surface of the turbine rotor 20.

The turbine stages 40 each include a stator blade row composed of a plurality of stator blades 41 (nozzle blades) and a rotor blade row composed of a plurality of rotor blades 42.

The plurality of stator blades 41 composing each of the stator blade rows are provided inside the inner casing 31. The plurality of stator blades 41 are arranged in the rotation direction R to surround the periphery of the turbine rotor 20 in the inner casing 31. The plurality of rotor blades 42 composing each of the rotor blade rows are arranged in the rotation direction R to surround the periphery of the turbine rotor 20 in the inner casing 31. The rotor blades 42 are provided on each of the rotor wheels 21 of the turbine rotor 20.

The turbine stages 40 are each composed of the stator blade row and the rotor blade row adjacently provided on the downstream side Ds of this stator blade row. The plurality of turbine stages 40 are arranged in the axial direction along the rotation axis AX. The turbine stages 40 on the front-stage side out of the plurality of turbine stages 40 are in the first inner casing part 31a of the inner casing 31. The turbine stages 40 on the rear-stage side out of the plurality of turbine stages 40 are in the second inner casing part 31b of the inner casing 31. In the turbine stages 40, seal fins 43 are provided as required to seal gaps between the inner peripheral surfaces of the stator blades 41 and the outer peripheral surface of the turbine rotor 20 and gaps between the inner peripheral surfaces of the rotor blades 42 and the outer peripheral surface of the turbine rotor 20.

The working medium inlet pipe 51 has a portion extending in the radial direction to pass through the outer casing 32 and the inner casing 31 from above the turbine casing 30 and a ring-shaped portion surrounding the periphery of the turbine rotor 20 in the rotation direction R, and these portions are coupled to each other. The working medium inlet pipe 51 communicates with the initial turbine stage 40 to introduce the working medium F to the initial turbine stage 40.

The exhaust pipe 52 extends in the radial direction to pass through the outer casing 32 and the inner casing 31 from under the turbine casing 30. The exhaust pipe 52 communicates with the exhaust chamber R31b to discharge, to the outside, the working medium F discharged to the exhaust chamber R31b from the turbine stage 40 of the exhaust stage.

As illustrated in FIG. 1, the cooling medium inlet pipe 53 passes through the outer casing 32. In the cooling medium inlet pipe 53, the cooling medium CF having passed through a valve V53 installed outside flows, and the cooling medium CF flowing therein is introduced to an inner casing cooling passage 61 formed in the second inner casing part 31b of the inner casing 31.

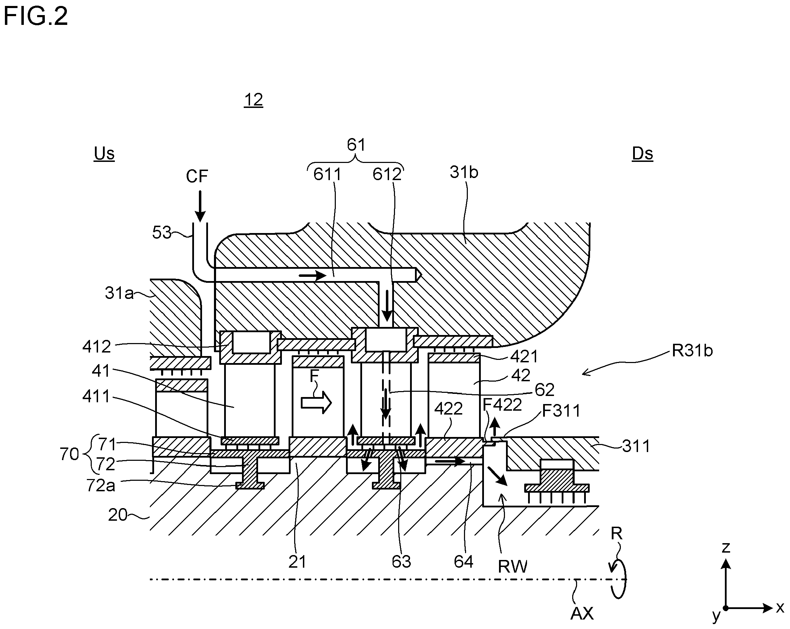

A part where the cooling medium CF flows in the above-described CO₂ turbine 12 will be described using FIG. 2. FIG. 2 illustrates part A surrounded by the broken line in FIG. 1 in an enlarged manner.

As illustrated in FIG. 2, the inner casing cooling passage 61 formed in the second inner casing part 31b has a first inner casing cooling passage part 611 and a second inner casing cooling passage part 612. The first inner casing cooling passage part 611 is a hole along the axial direction of the turbine rotor 20 and has one end communicating with the cooling medium inlet pipe 53. The second inner casing cooling passage part 612 is a hole along the radial direction of the turbine rotor 20 and is formed on the radially inner side of the first inner casing cooling passage part 611. The second inner casing cooling passage part 612 has a radially outer end communicating with the first inner casing cooling passage part 611. The other radially inner end of the second inner casing cooling passage part 612 communicates with nozzle cooling passages 62.

As illustrated in FIG. 2, the stator blades 41 are between a nozzle inner ring 411 and a nozzle outer ring 412 to form each of the stator blade rows (nozzle diaphragms), and in the turbine stage 40 of the exhaust stage, the nozzle cooling passages 62 are formed to pass through the inner parts of the nozzle inner ring 411, the stator blades 41, and the nozzle outer ring 412 in the radial direction.

As illustrated in FIG. 2, heat shield pieces 70, which are not illustrated in FIG. 1, are provided on the outer peripheral surface of the turbine rotor 20 at its parts that face the stator blades 41. Here, the heat shield pieces 70 are supported on the outer peripheral surface of the turbine rotor 20 at its parts that are located between the plurality of rotor wheels 21 and face the inner peripheral surfaces of the nozzle inner rings 411. The heat shield pieces 70 thermally insulate the main flow path where the working medium F flows in the turbine casing 30 and the turbine rotor 20 from each other.

The heat shield pieces 70 each include a heat shield plate 71 and a leg portion 72, and the heat shield plate 71 and the leg portion 72 are arranged in order from the outer side toward the inner side in the radial direction of the turbine rotor 20 (the upper side toward the lower side in FIG. 2).

The heat shield plates 71 of the heat shield pieces 70 each include a portion extending along the rotation axis AX of the turbine rotor 20. The heat shield plates 71 are each installed such that a gap is present between the outer peripheral surface of the heat shield plate 71 and the inner peripheral surface of the nozzle inner ring 411 and a gap is present between the inner peripheral surface of the heat shield plate 71 and the outer peripheral surface of the turbine rotor 20. The leg portions 72 each extend in the radial direction of the turbine rotor 20 and have an engagement portion 72a formed on its radially inner side. The width of each of the engagement portions 72a in the axial direction along the rotation axis AX of the turbine rotor 20 is larger than that of the leg portion 72. The engagement portions 72a are engaged with engagement grooves formed in the turbine rotor 20.

In the heat shield plate 71 of the heat shield piece 70 facing the stator blades 41 forming the turbine stage 40 of the exhaust stage, a heat shield plate cooling passage 63 in which the cooling medium CF flows is formed. The heat shield plate cooling passage 63 passes through the heat shield plate 71 in the radial direction.

As illustrated in FIG. 2, the rotor blades 42 have snubbers 421 in their radially outer side portions and have implant portions 422 in their radially inner side portions. The implant portions 422 are fitted in the outer peripheral surfaces of the rotor wheels 21 of the turbine rotor 20.

Here, gaps are present between the inner peripheral portions of the implant portions 422 and the outer peripheral portions of the rotor wheels 21. In the turbine stage 40 of the exhaust stage, this gap functions as a wheel cooling passage 64 where the cooling medium CF flows. The wheel cooling passage 64 extends in the axial direction. An upstream side Us end of the wheel cooling passage 64 communicates with the space present between the inner peripheral surface of the heat shield plate 71 and the outer peripheral surface of the turbine rotor 20. A downstream side Ds end of the wheel cooling passage 64 communicates with the exhaust-stage wheel space RW.

The exhaust-stage wheel space RW is at a position that is more on the downstream side Ds than the rotor wheel 21 of the exhaust stage in terms of the axial direction and is more on the radially inner side than the exhaust chamber R31b.

Note that the inner casing cooling passage 61, the nozzle cooling passages 62, and the heat shield plate cooling passage 63 are formed at the respective parts by machining.

The flow of the cooling medium CF in the above-described CO₂ turbine 12 will be described using FIG. 2. Here, a case where the flow rate of the working medium F is lower than that in a rated load operation as in a partial load operation is illustrated.

The cooling medium CF is introduced from the cooling medium inlet pipe 53 to the inner casing cooling passage 61 formed in the second inner casing part 31b of the inner casing 31. Here, the cooling medium CF is lower in temperature and higher in pressure than the working medium F when introduced.

Next, the cooling medium CF flows in the nozzle cooling passages 62 passing through the inner parts of the nozzle inner ring 411, the stator blades 41, and the nozzle outer ring 412 in the radial direction in the turbine stage 40 of the exhaust stage.

Next, the cooling medium CF flows in the heat shield plate cooling passage 63 formed in the heat shield plate 71 of the heat shield piece 70 in the turbine stage 40 of the exhaust stage. The cooling medium CF is introduced through the heat shield plate cooling passage 63 to the space between the inner peripheral surface of the heat shield plate 71 and the outer peripheral surface of the turbine rotor 20.

Next, the cooling medium CF flows in the wheel cooling passage 64 present between the implant portions 422 and the rotor wheel 21 in the turbine stage 40 of the exhaust stage and thereafter flows to the exhaust-stage wheel space RW. Consequently, the parts where the cooling medium CF flows are cooled.

The implant portions 422 of the rotor blades 42 of the exhaust stage have seal fins F422 in their downstream sides Ds, and the seal head 311 forming the second inner casing part 31b has a seal fin F311 in its upstream side Us. This reduces the leakage of the working medium F at an outlet of the exhaust stage from the exhaust chamber R31b to the exhaust-stage wheel space RW. However, in the state in which the flow rate of the working medium F flowing in the CO₂ turbine is lower than that in the rated load operation as in the partial load operation or the like, a differential pressure between the exhaust chamber R31b and the exhaust-stage wheel space RW is small. Accordingly, the high-temperature working medium F is sucked from the exhaust chamber R31b to the exhaust-stage wheel space RW through a gap between the seal fins F422 and the seal fin F311. Further, the atmospheric temperature is increased near the exhaust stage by windage loss, which may cause the temperatures of the components to exceed the allowable temperature.

In this embodiment, on the other hand, the cooling medium CF is introduced to the exhaust-stage wheel space RW to cool the exhaust-stage wheel space RW as described above. Here, the cooling medium CF adjusted to be higher in pressure than the working medium F is introduced from the outside as describes above. Therefore, in this embodiment, the cooling medium CF leaks from the exhaust-stage wheel space RW to the exhaust chamber R31b through the gap between the seal fins F422 and the seal fin F311, making it possible to prevent the high-temperature working medium F from being sucked from the exhaust chamber R31b to the exhaust-stage wheel space RW.

Similarly, in this embodiment, the cooling medium CF leaks from the space located between the inner peripheral surface of the heat shield plate 71 and the outer peripheral surface of the turbine rotor 20 in terms of the radial direction to the working medium flow path which is located more on the radially outer side than the heat shield plate 71 and in which the working medium F flows, through the gap between the heat shield plate 71 and the implant portions 422 and so on. Therefore, in this embodiment, it is possible to prevent the high-temperature working medium F from being sucked from the working medium flow path to the space between the inner peripheral surface of the heat shield plate 71 and the outer peripheral surface of the turbine rotor 20.

Therefore, this embodiment reduces an increase in the atmospheric temperature near the turbine stage 40 of the exhaust stage caused by windage loss to effectively prevent the temperature of components from exceeding the allowable temperature. As a result, the components need not be made of highly heat-resistant material, enabling a cost reduction.

### [Modification Example 1]

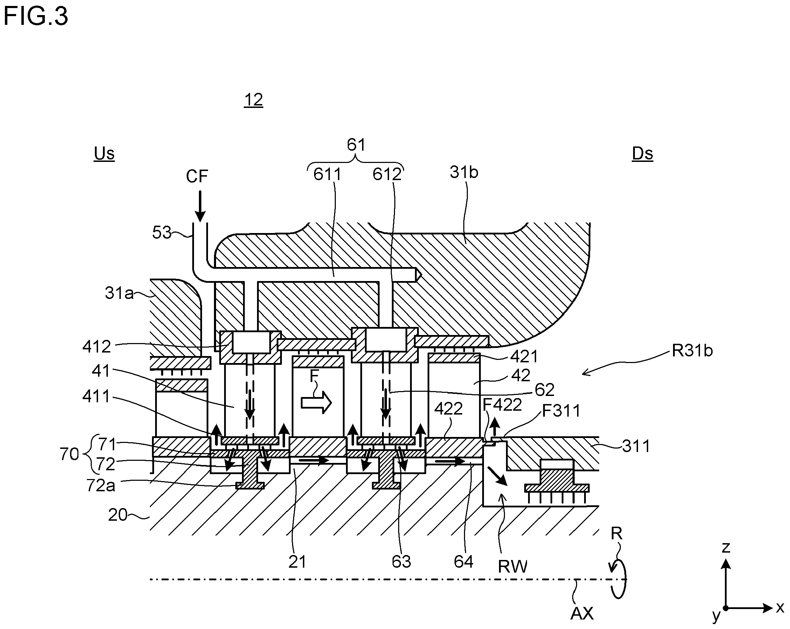

In the above-described embodiment, the parts of the CO₂ turbine 12 are structured such that the cooling medium CF flows in the turbine stage 40 of the exhaust stage, but this is not restrictive. As illustrated in FIG. 3, for example, the parts may be structured such that the cooling medium CF further flows also in the turbine stage 40 immediately preceding the turbine stage 40 of the exhaust stage. That is, the parts may be structured such that the cooling medium CF flows also in the turbine stage 40 that is more on the upstream side than the turbine stage 40 of the exhaust stage. This makes it possible to more surely execute the cooling.

### [Modification Example 2]

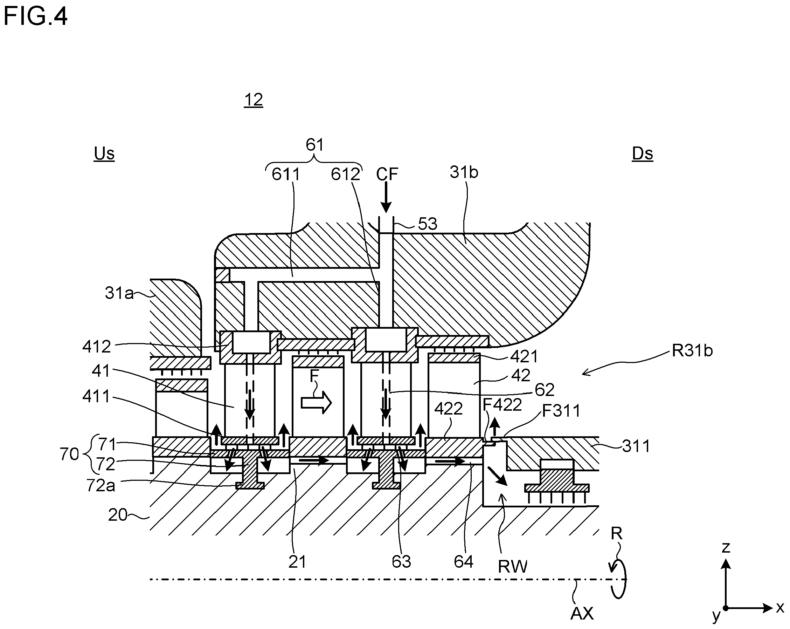

In FIG. 3, the cooling medium inlet pipe 53 is provided more on the upstream side Us in terms of the flow of the working medium F than the turbine stage 40 of the exhaust stage 40 and the turbine stage 40 immediately preceding the turbine stage 40 of the exhaust stage, but this is not restrictive. As illustrated in FIG. 4, the cooling medium inlet pipe 53 may be provided, for example, more on the radially outer side (upper side in FIG. 4) than the place where the stator blades 41 are installed in the turbine stage 40 of the exhaust stage. That is, the inlet position of the cooling medium CF is selectable as desired.

### [Modification Example 3]

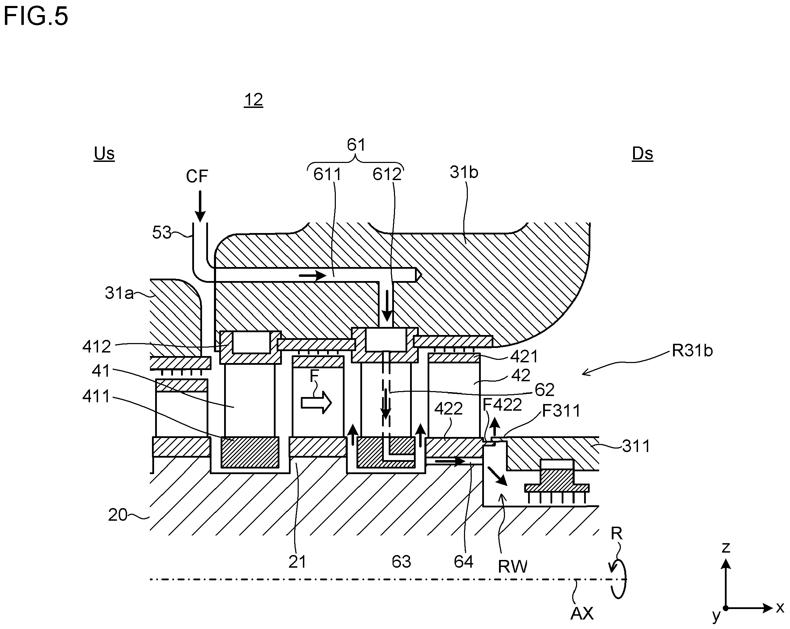

In the above-described embodiment, the case where the heat shield pieces 70 are provided is described, but this is not restrictive. As illustrated in FIG. 5, the heat shield pieces 70 need not be provided. In this case, in the nozzle inner ring 411, the cooling medium CF passes, for example, from a part extending in the radial direction to a part extending in the axial direction and is discharged to a part located more on the downstream side than the nozzle inner ring 411.

### [Modification Example 4]

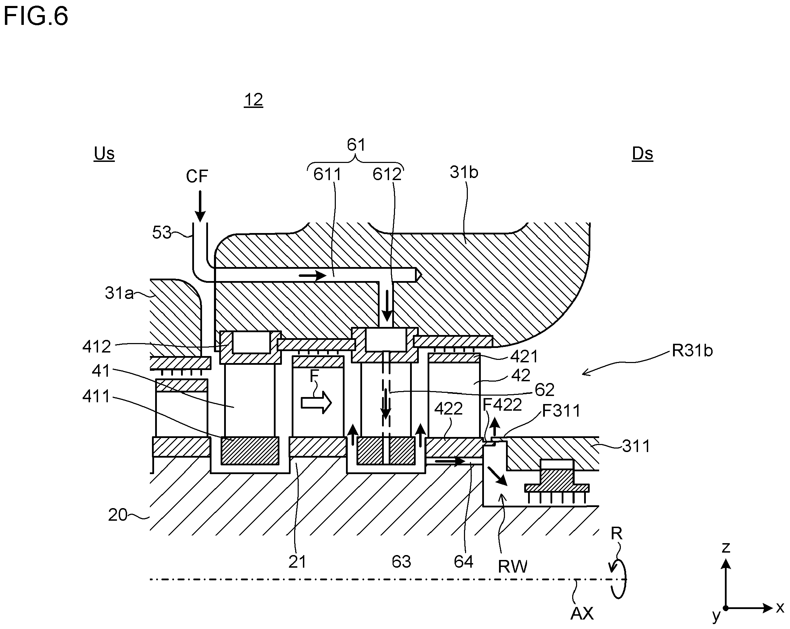

Instead of the structure illustrated in FIG. 5, the nozzle inner ring 411 may be structured such that the cooling medium CF passes in the part extending in the radial direction in the nozzle inner ring 411 and is discharged to a part more on the radially inner side than the nozzle inner ring 411 as illustrated in FIG. 6.

### <Second Embodiment>

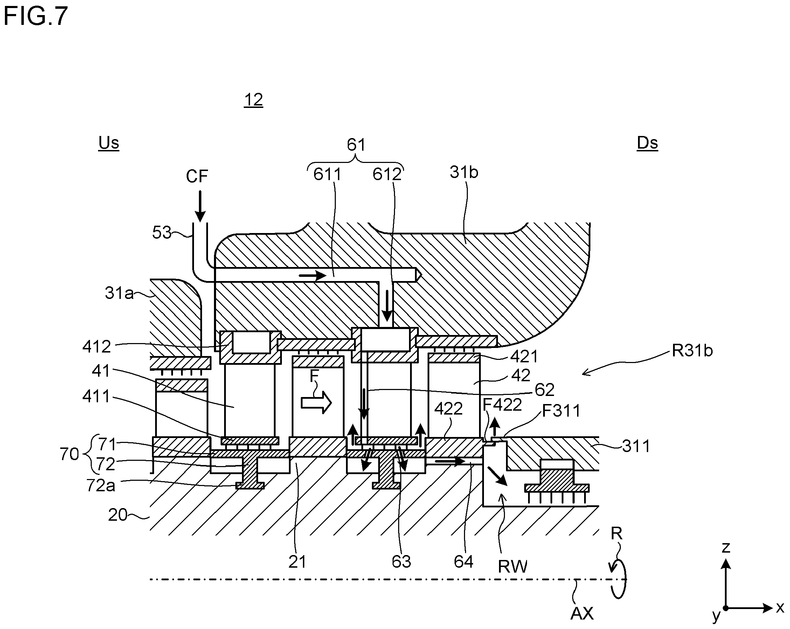

A part where a cooling medium CF flows in a CO₂ turbine 12 of a second embodiment will be described using FIG. 7. FIG. 7 illustrates the same part as that illustrated in FIG. 2.

As illustrated in FIG. 7, this embodiment is different from the above-described first embodiment (refer to FIG. 2) in the form of nozzle cooling passages 62. Except for this and other related points, this embodiment is the same as the first embodiment. Therefore, a redundant description of the same contents will be omitted when appropriate.

In the first embodiment, the nozzle cooling passages 62 are holes passing through the inner parts of the nozzle inner ring 411, the stator blades 41, and the nozzle outer ring 412 in the radial direction as illustrated in FIG. 2.

On the other hand, in this embodiment, as the nozzle cooling passages 62, holes are not formed in the inner parts of the stator blades 41. In this embodiment, tubular bodies are installed on the outer peripheral surfaces of the stator blades 41, and the inner parts of the tubular bodies function as part of the nozzle cooling passages 62 where the cooling medium CF flows. Here, for example, the tubular bodies are installed on front edge portions where the temperature tends to become high in the stator blades 41.

In this embodiment, the nozzle cooling passages 62 are formed using the tubular bodies on the outer parts of the stator blades 41 without forming the holes in the inner parts of the stator blades 41 by machining, making it possible to easily shorten the production time.

### <Others>

In the above-described embodiments, the case where the cooling medium CF is supplied to the turbine stage 40 of the rear-stage side out of the plurality of turbine stages 40 is described, but this is not restrictive. Adoptable is a configuration in which the cooling medium CF is supplied to the turbine stage 40 on the front-stage side out of the plurality of turbine stages 40. For example, the cooling medium CF may be supplied from the periphery of the working medium inlet pipe 51 into the first inner casing part 31a, and this cooling medium CF may be supplied to the stator blades 41 forming the turbine stage 40 on the front-stage side or the like. Besides, the cooling medium CF may be appropriately supplied to a part requiring the cooling. Further, in the above-described embodiments, the case where the balance piston 22 is provided is described, but this is not restrictive.

In the above-described embodiments, the turbine casing 30 has the double casing structure, but this is not restrictive. The turbine casing 30 may have a single casing structure.

### REFERENCE SIGNS LIST

12...turbine, 20...turbine rotor, 21...rotor wheel, 22...balance piston, 30...turbine casing, 31...inner casing, 31a...first inner casing part, 31b...second inner casing part, 32...outer casing, 35...seal member, 40...turbine stage, 41...stator blade, 42...rotor blade, 43...seal fin, 51...working medium inlet pipe, 52...exhaust pipe, 53...cooling medium inlet pipe, 60...bearing, 61...inner casing cooling passage, 62...nozzle cooling passage, 63...heat shield plate cooling passage, 64...wheel cooling passage, 70...heat shield piece, 71...heat shield plate, 72...leg portion, 72a...engagement portion, 311...seal head, 411...nozzle inner ring, 412...nozzle outer ring, 421...snubber, 422...implant portion, 611...first inner casing cooling passage part, 612...second inner casing cooling passage part, AX...rotation axis, CF...cooling medium, F...working medium, F311...seal fin, F422...seal fin, R31b...exhaust chamber, RW...exhaust-stage wheel space, V53...valve

## Claims

1. A turbine (12) comprising:
a turbine rotor (20);
a turbine casing (30) housing the turbine rotor (20);
a plurality of turbine stages (40) each including a stator blade row having a plurality of stator blades (41) arranged inside the turbine casing (30) and a rotor blade row having a plurality of rotor blades (42) fitted in a rotor wheel of the turbine rotor (20) inside the turbine casing (30), the plurality of turbine stages (40) being arranged in an axial direction of the turbine rotor (20);
an exhaust chamber (R31b) which is provided in the turbine casing (30) and to which a working medium (F) is discharged after working sequentially in the plurality of turbine stages (40); and
an exhaust-stage wheel space (RW) located at a position that is more on a downstream side than the turbine stage (40) of an exhaust stage out of the plurality of turbine stages (40) and is more on an inner side than the exhaust chamber (R31b) in terms of a radial direction of the turbine rotor (20),
wherein a cooling medium (CF) higher in pressure and lower in temperature than the working medium (F) is introduced from an outer part to an inner part of the turbine casing via an inlet pipe (53) passing through the turbine casing (30),
**characterized in that**, in at least the turbine stage (40) of the exhaust stage, the cooling medium (CF) passes through the stator blade (41) and thereafter passes through a flow path present between the rotor blades (42) and the rotor wheel to flow to the exhaust-stage wheel space (RW).

2. The turbine (12) according to claim 1, wherein, besides the turbine stage (40) of the exhaust stage, in another turbine stage (40) located more on an upstream side than the turbine stage (40) of the exhaust stage, the cooling medium (CF) passes through the stator blade (41) and thereafter flows in a flow path (64) present between the rotor blades (42) and the rotor wheel.

3. The turbine (12) according to claim 1 or 2, wherein a tubular body (62) is installed on an outer peripheral surface of the stator blade (41), and the cooling medium (CF) flows in an inner part of the tubular body (62).

## Patentansprüche

1. Turbine (12), umfassend:
einen Turbinenrotor (20);
ein Turbinengehäuse (30), das den Turbinenrotor (20) aufnimmt;
eine Vielzahl von Turbinenstufen (40), die jeweils eine Statorschaufelreihe, die eine Vielzahl von Statorschaufeln (41) aufweist, die innerhalb des Turbinengehäuses (30) angeordnet sind, und eine Rotorschaufelreihe aufweisen, die eine Vielzahl von Rotorschaufeln (42) aufweist, die in einem Rotorrad des Turbinenrotors (20) innerhalb des Turbinengehäuses (30) angebracht sind, wobei die Vielzahl von Turbinenstufen (40) in einer Axialrichtung des Turbinenrotors (20) angeordnet ist;
eine Abgaskammer (R31b), die in dem Turbinengehäuse (30) vorgesehen ist und in die ein Arbeitsmedium (F) ausgestoßen wird, nachdem es sequenziell in der Vielzahl von Turbinenstufen (40) Arbeit verrichtet hat; und
ein Abgasstufenradraum (RW), der an einer Stelle angeordnet ist, die weiter stromabwärts als die Turbinenstufe (40) einer Abgasstufe aus der Vielzahl von Turbinenstufen (40) liegt und die weiter innen als die Abgaskammer (R31b) bezogen auf eine Radialrichtung des Turbinenrotors (20) liegt,
wobei ein Kühlmedium (CF) mit größerem Druck und niedrigerer Temperatur als das Arbeitsmedium (F) von einem äußeren Teil in einen inneren Teil des Turbinengehäuses über ein Einlassrohr (53) eingeleitet wird, welches das Turbinengehäuse (30) durchläuft,
**dadurch gekennzeichnet, dass** in zumindest der Turbinenstufe (40) der Abgasstufe das Kühlmedium (CF) die Statorschaufel (41) durchläuft und danach einen Strömungsweg durchläuft, der zwischen den Rotorschaufeln (42) und dem Rotorrad vorhanden ist, um zum Abgasstufenradraum (RW) zu strömen.

2. Turbine (12) nach Anspruch 1, bei der außer in der Turbinenstufe (40) der Abgasstufe das Kühlmedium (CF) in einer anderen Turbinenstufe (40), die sich weiter stromaufwärts als die Turbinenstufe (40) der Abgasstufe befindet, die Statorschaufel (41) durchläuft und danach in einem Strömungsweg (64) strömt, der zwischen den Rotorschaufeln (42) und dem Rotorrad vorhanden ist.

3. Turbine (12) nach Anspruch 1 oder 2, bei der ein ringförmiger Körper (62) an einer Außenumfangsfläche der Statorschaufel (41) angebracht ist und das Kühlmedium (CF) in einem inneren Teil des ringförmigen Körpers (62) strömt.

## Revendications

1. Turbine (12) comprenant :
un rotor de turbine (20) ;
une enveloppe de turbine (30) logeant le rotor de turbine (20) ;
une pluralité d'étages de turbine (40) comprenant chacun une rangée d'aubes de stator comportant une pluralité d'aubes de stator (41) agencées à l'intérieur de l'enveloppe de turbine (30) et une rangée de pales de rotor comportant une pluralité de pales de rotor (42) intégrées dans une roue de rotor du rotor de turbine (20) à l'intérieur de l'enveloppe de turbine (30), la pluralité d'étages de turbine (40) étant agencés dans une direction axiale du rotor de turbine (20) ;
une chambre d'échappement (R31b) qui est disposée dans l'enveloppe de turbine (30) et vers laquelle un fluide de travail (F) est déchargé après le travail de manière séquentielle dans la pluralité d'étages de turbine (40) ; et
un espace de roue d'étage d'échappement (RW) situé au niveau d'une position qui est plus d'un côté aval que l'étage de turbine (40) d'un étage d'échappement parmi la pluralité d'étages de turbine (40) et est plus d'un côté intérieur que la chambre d'échappement (R31b) du point de vue d'une direction radiale du rotor de turbine (20),
dans laquelle un fluide de refroidissement (CF) de pression supérieure et de température inférieure par rapport au fluide de travail (F) est introduit d'une partie extérieure vers une partie intérieure de l'enveloppe de turbine par l'intermédiaire d'un tube d'entrée (53) passant à travers l'enveloppe de turbine (30),
**caractérisée en ce que**, dans l'au moins un étage de turbine (40) de l'étage d'échappement, le fluide de refroidissement (CF) passe à travers l'aube de stator (41) et s'écoule ensuite à travers un chemin d'écoulement présent entre les pales de rotor (42) et la roue de rotor pour s'écouler vers l'espace de roue d'étage d'échappement (RW).

2. Turbine (12) selon la revendication 1, dans laquelle, outre l'étage de turbine (40) de l'étage d'échappement, dans un autre étage de turbine (40) situé plus d'un côté amont que l'étage de turbine (40) de l'étage d'échappement, le fluide de refroidissement (CF) passe à travers l'aube de stator (41) et s'écoule ensuite dans un chemin d'écoulement (64) présent entre les pales de rotor (42) et la roue de rotor.

3. Turbine (12) selon la revendication 1 ou 2, dans laquelle un corps tubulaire (62) est installé sur une surface périphérique extérieure de l'aube de stator (41), et le fluide de refroidissement (CF) s'écoule dans une partie intérieure du corps tubulaire (62).
